# EUROPEAN PATENT SPECIFICATION

(11) **EP 1 790 198 B1**
(45) Date of publication and mention of the grant of the patent: **04.08.2010**
(21) Application number: 05767948.2
(22) Date of filing: 27.07.2005
(51) Int. Cl.: H05B 6/80, H05B 6/78, C09C 1/00

(54) **MICRO-WAVE OVEN FOR THE PREPARATION OF CERAMIC PIGMENTS PROCESS USING SUCH OVEN**
MIKROWELLENOFEN ZUR HERSTELLUNG KERAMISCHER PIGMENTE PROZESS UNTER VERWENDUNG EINES SOLCHEN OFENS
FOUR A MICRO-ONDES POUR PREPARER DES PIGMENTS DE CERAMIQUE ET PROCEDE D'UTILISATION D'UN TEL FOUR

(30) Priority: 27.07.2004 IT FI20040164
(43) Date of publication of application: 30.05.2007
(73) Proprietor: Colorobbia Italia S.p.a., 50053 Sovigliana Vinci (Firenze) (IT)
(72) Inventor: BALDI, Giovanni, I-50025 Montespertoli (IT); BITOSSI, Marco, I-50056 Montelupo Fiorentino (IT)
(74) Representative: Gervasi, Gemma
(86) International application number: PCT/IB2005/002219
(87) International publication number: WO 2006/013437

(56) References cited:
- EP-A- 0 016 699
- EP-A- 0 985 893
- GB-A- 2 360 040
- US-A- 3 626 838

## Description

### SCOPE OF THE INVENTION

This invention refers to the field of pigments for ceramics, in particular to a micro-wave oven and to the process that uses such oven to prepare ceramic pigments.

### STATE OF THE ART

Ceramic pigments are prepared using well-entrenched processes both as regards the materials and the reaction processes to be used and also the equipment necessary to carry out such processes of preparation.

Basically, the pigments are prepared calcinating in a discontinuous oven the starting mixtures (usually consisting of oxides or crystalline silicates possibly combined with suitable additives, melting agents etc.) placed in a container made of refractory material.

The mass of reaction products is then left to cool and the pigment obtained in this way is ground using the usual methods of ceramics technology until the required grain size is obtained.

Use of discontinuous ovens and calcination processes of the crystalline compounds as described above obviously implies high temperatures, long times and therefore high energy consumption; also the pigments obtained in this way are characterised by irregularities.

There is therefore a pressing need to develop other synthesis processes and new instruments able to simplify the production of pigments and above all which promote more homogenous products.

### SUMMARY OF THE INVENTION

The Applicant has developed a micro-wave oven and a process that uses such oven that make it possible to obtain very homogenous ceramic pigments in very reduced times compared with state-of-the-art processes; this therefore implies lower energy consumption, less impact on the environment and a more flexible process whereby it is possible to obtain an end product of excellent quality. Subject of the invention is therefore the micro-wave oven as defined in the claim 1. Further subject of the invention is the use of the above said micro-wave oven for the production of ceramic pigments and the process for the preparation of ceramic pigments carried out using the above said micro-wave oven.

Characteristics and advantages of the invention will be illustrated in detail in the following description.

### SHORT DESCRIPTION OF THE FIGURES

Figure 1 shows a cross-section of a micro-wave oven according to the invention.
Figures 2A and 2B are respectively a front view and cross-section of the flange with "sliver type" opening included in the oven of the invention whereas Figures 3A, 3B, 3C and 3D are prospective views of four different embodiments of the flange having one or more septa therein.

### DETAILED DESCRIPTION OF THE INVENTION

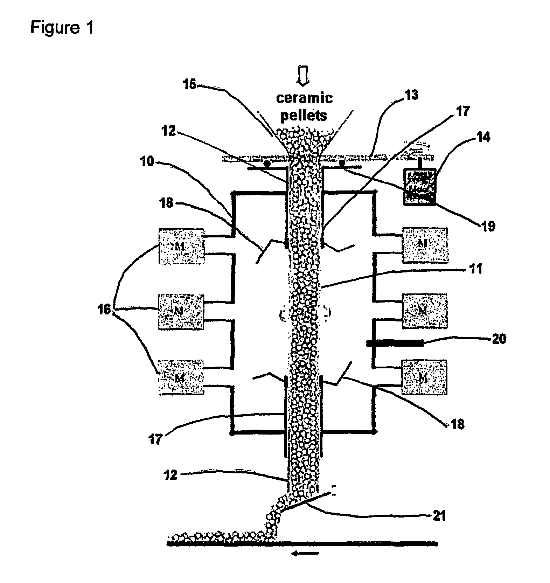

Referring to Figures 1, 2A, 2B, 3A, 3B, 3C and 3D illustrated briefly above, the oven referred to in the invention, its applications and advantages compared with the prior art are described in detail below.

According to the invention, the micro-wave oven includes a mainly cylindrical multi-mode chamber (10) through which, for its entire axis, passes a tube (11) made of material transparent to micro-waves or with low absorption of the micro-waves, for example a tube made of quartz, mullite or alumina, whose two ends (12) protrude from such cylindrical chamber through suitable circular openings in the walls of the chamber, and which acts as reaction chamber.

With regard to this invention, the expression "multi-mode chamber" means a cavity that, through a multitude of simultaneous resonance models, is characterized by relatively homogenous distribution but very irregular intensity of the field; with low local values of intensity.

The cylindrical tube (11) is open at both ends and is fitted with a rotating disk (13), integral with the tube and preferably arranged close to the upper opening externally to the cylindrical multi-mode chamber, connected to a suitable means of movement (14), for example an electric motor.

A hopper (15), to facilitate feeding of the tube (11), may be installed on the upper infeed of the tube.

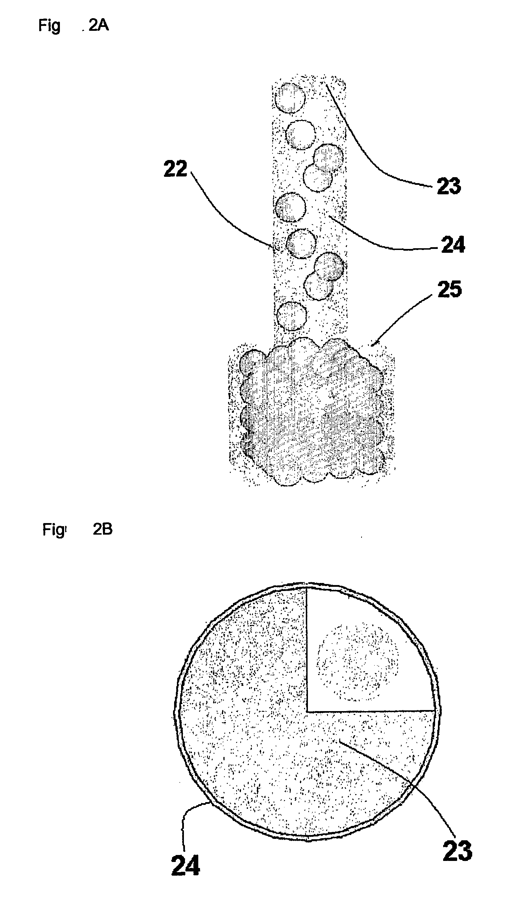

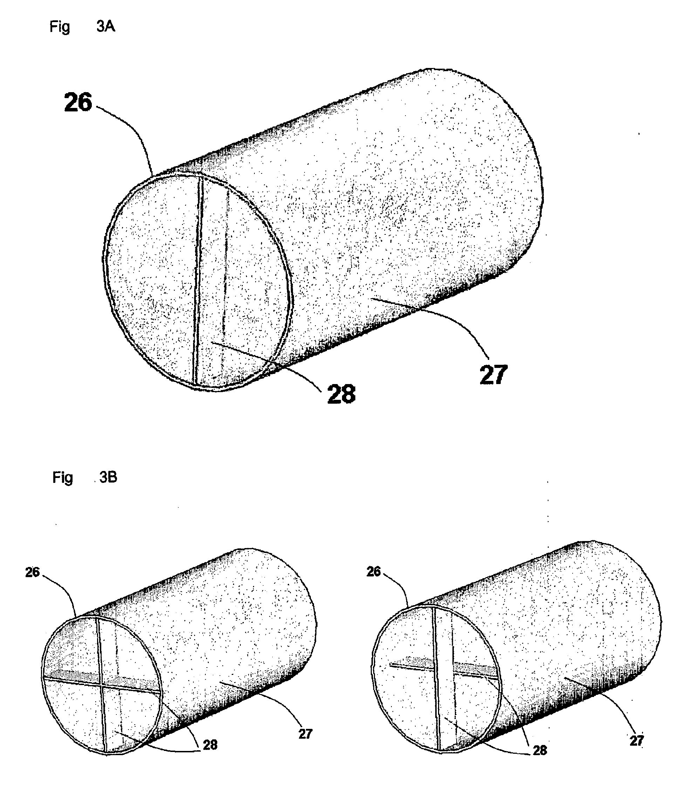

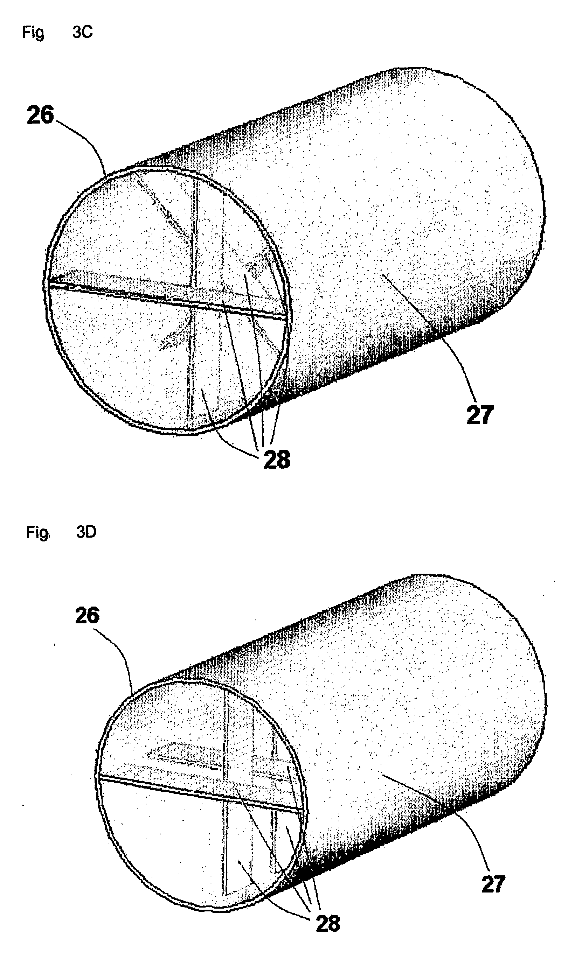

Alternatively, for feeding of the tube, the flange (22) as shown in Figure 2A, or the flange (26) as shown in Figures 3A-3D can be used at its upper opening.

As can be seen in Figure 2A, the flange (22) consists of a circular tube (24), with a diameter of more than 2 cm, fitted with a "sliver" type aperture (23) and of a container (25) where the pellets that pass, down through the tube (24) are collected. The "sliver type" aperture, more clearly visible in the cross-section of Figure 2B, rotating at a suitable speed, allows the material to be calcinated to spiral down inside the tube, making it possible to fill the entire space of the tube with the desired volumetric concentration.

Figures 3A-3D show different embodiments of the flange (26), consisting of a metallic circular tube (27) having inside one or more septa (28), also metallic. Returning to Figure 1, the electromagnetic wave generators (16), for example clusters of Magnetron, that heat the chamber, are arranged along the internal cylindrical surface of the chamber, are arranged in specific cavities so that they are diametrically opposite to each other.

Preferably at the position of the two openings of the chamber through which the quartz tube passes, metal sleeves (17) are positioned that guide the tube and also act as circular wave guides preventing leakage of electromagnetic waves from the chamber. The outer part of the upper sleeve may also act as support (19) for the rotating disk (13).

If preferred, on the part inside the chamber of such sleeves, it is possible to fit mode stirrers (18), i.e. suitably shaped metal devices of various design according to the dimensions of the cavity that move inside the oven, able to uniform the fields and to decouple the diametrically opposed outlets of the magnetron.

If preferred, a sensor for measurement of the temperature (20) such as for example an optical or millimetric wave radiometer can be arranged in the chamber.

Preferably, the inside walls of the chamber (10) can be covered with a layer of heat-insulating material transparent to micro-waves and with low losses.

Lastly, the oven may be fitted with a microprocessor for control of uniformity of the internal temperature that also acts on the Magnetron on/off cycle.

In the present micro-wave oven, as described above, mixtures of oxides are calcinated in order to form ceramic pigments according to the invention. In order to establish a continuous work cycle, such starting mixtures are reduced to pellets beforehand in order to obtain balls of crude mixtures to be passed, in a hypothetical continuous cycle, through the micro-wave oven for baking.

In the process for the production of ceramic pigments according to the invention, the pellets consisting of the crystalline' compounds necessary to produce the desired pigment are inserted in the top end of the tube and flow due to the effect of gravity along the tube as far as the outlet at the opposite end and are therefore heated by the micro-waves for the time required to form the pigment.

The flow of pellets may be regulated at the outlet of the tube for example by fastening at the lower end of the tube an opening bottom (21) with an opening, which can be regulated according to required flow of material.

Continuous rotation of the tube ensures that, at each complete rotation, each pellet receives the same average electromagnetic energy.

According to a further particular embodiment of the invention, the pellets flow in the tube (11) dispersed in an insulating medium which limits dispersion of heat as it is transparent to the micro-waves, or in a susceptor which, by absorbing the micro-waves, instantaneously transfers the heat generated to the lining material, such as for example alumina, graphite powder, silicone carbide, polyethylenglycol (indicated below with the abbreviation PEG) or diethylenglycol. (indicated below with the abbreviation DEG) an similar, or mixtures thereof; the presence of such means during the phase of formation of the pigment promotes micro-wave calcination, in one case reducing the dispersion of heat and prompting even heating of the sample and, in the other, bringing the system to a temperature such as to generate heat independently due to absorption of the micro-waves which does not always occur at room temperature.

PEG or DEG can be used as susceptor, for example, by dipping of the pellet in a solution containing PEG or DEG, or by spraying or using other known techniques, able to cover and impregnate the pellet with the susceptor; the pellet is then inserted in a micro-wave cavity together, for example, with alumina as insulating material.

The treatment times inside the micro-wave oven are preferably between 2.5 and 60 minutes whereas, as regards temperatures, these are defined by the di-electric characteristics of the material and by the presence of susceptors or insulating agents.

Preferably, the pellets used as raw material in the ceramic pigment production process according to the invention consist of mixtures of oxides in powder according to stoichiometry of the pigment to be obtained, amalgamated with adhesives such as carboxy-methyl-cellulose or sodium metasilicate Na₂SiO₃ 5H₂O during pelletization of the material.

Pelletization can be carried out according to the known technique of the state of the art in which reagents are wet mixed in porcelain jars; the mixture obtained is dried in an oven at approximately 110°C, then ground in a mortar and subsequently, on a vertically-positioned sloping rotating plate, it is rolled, wetted with an adhesive, in order to obtain pellets that are then dried in an oven at approximately 110°C for some hours.

Preferably the pellets used in the process according to the invention are between 2.0 and 30 mm in size

As can be seen, according to the invention the process can be carried out continuously adapting the speed of movement of the pellets in the micro-wave oven both to the material and the power used.

Some examples of preparation of the present ceramic pigments are provided below for the purpose of illustration, without limitation, of the invention.

### EXAMPLE 1

### Cobalt aluminates (CoAl₂O₄) - Blue pigment

The following raw materials were wet mixed in porcelain jars:

| | |
|---|---|
| Al₂O₃ | 55.95% (p/p) |
| Co₃O₄ | 44.05% (p/p). |

The mixture thus obtained is dried in an oven at 110°C, ground in a mortar and then, on a vertically-positioned sloping rotating plate, it is rolled, wetted with carboxy-methyl-cellulose as adhesive. The so obtained pellets are dried in an oven at 110°C for a few hours.

These mixed materials were used to form pellets that were baked in a micro-wave oven at a frequency = 2.45 GHz and at P = 1,700 W.

Insulating material used: the entire pellet was covered with alumina.

Optimal dimensions: 22 mm

Baking time: 4'

The X-ray diffractograms of the pellets calcinated with the use of alumina show the presence of a single phase, that of the spinel CoAl₂O₄.

The pigment obtained was ground in a micro-mill with acetone and applied to grès, to transparent enamel and to opaque enamel, obtaining excellent results in terms of homogeneity and quality of the colour.

Preliminary measurements of the consumption of the micro-wave calcination cycle of this mixture were made calculating the specific theoretical consumption. Practically speaking, with the aid of a multi-mode oven able to detect the real power emitted by the generator and the power reflected by the sample, we calculated the values of the power dissipated inside the sample every 10 seconds. The data of this acquisition are provided in the table below. Subsequently, we constructed a graph of the time values versus those of the power dissipated; the integral of the curve yielded the value of the theoretical consumption expressed in Joules. Rescaling this value as KWh and dividing the value by the weight of the sample we calcinated, we obtained the specific theoretical consumption which, in our case, was equal to 4.18 KWh/Kg and the effective consumption equal to 5.49 KWh/Kg.

### EXAMPLE 2

### Mixed oxide of Iron and Chromium (Fe_{1.5}Cr_{1.5}O₃) - Brown pigment

Pellets were prepared with the following raw materials following the procedure and in the operating conditions already described above in Example 1:

| | |
|---|---|
| Fe₂O₃ | 51.24% (p/p) |
| Cr₂O₃ | 48.76% (p/p) |

Pellets were made with these materials which were then baked in a micro-wave oven at a frequency = 2.45 GHz and P =1,700 W.

### Insulating material used: alumina

The dimensions of the pellets and related baking times are indicated in Table 1 below.

**Table 1**

| **Diameter (mm)** | **Time (minutes)** | **Mixture** |
|---|---|---|
| 6.78 | 15 | Al₂O₃ |
| 11.56 | 5 | Al₂O₃ |
| 15 | 4.5 | Al₂O₃ |
| 17.4 | 4.5 | Al₂O₃ |

Optimal dimensions: between 11.5 and 15 mm.

The peaks of the diffractogram carried out on the calcinated material refer to the Fe_{1.5}Cr_{1.5}O₃. structure

The pigment obtained was ground in a micro-mill with acetone and applied to grès (mèta paste), to transparent enamel and to opaque enamel, obtaining excellent results in terms of homogeneity and quality of the colour.

Studies were carried out on this mixture referring to the consumption of a micro-wave calcination cycle, recording the power at the outlet and therefore the consumption of a heating cycle according to weight. It was noted that an increase in weight did not necessarily imply an increase in consumption; on the contrary, the opposite was true in some cases. As a matter of fact, heating due to the micro-waves is accompanied by that due to radiation by other hot objects, i.e. adjacent pellets.

Therefor a minimum of consumption is preached, subsequently rising again but with a minor slope.

### EXAMPLE 3

### Chromate of Cobalt (CoCr₂O₄) - Green pigment

The pigment of the title was prepared as described in Example 1 but using the following oxides as raw materials:

| | |
|---|---|
| Co₃O₄ | 34.56% (p/p) |
| Cr₂O₃ | 65.44% (p/p) |

### EXAMPLE 4

Mixed spinels of Chromium, Cobalt, Iron and Manganese - Black pigment

The pigment of the title was prepared as described above in Example 1, but using the following oxides as raw materials:

| | |
|---|---|
| Co₃O₄ | 29.23% (p/p) |
| Cr₂O₃ | 33% (p/p) |
| Fe₂O₃ | 30,1% (p/p) |
| MnO₂ | 7,67% (p/p) |

### EXAMPLE 5.

### Mixed oxide of Tin, Titanium and Vanadium (Sn_{1-X-y}TiₓV_{y}O₂) - Yellow pigment

The pigment of the title was prepared as described above in Example 1, but using the following oxides as raw materials:

| | |
|---|---|
| SnO₂ | 93% (p/p) |
| TiO₂ | 3% (p/p) |
| NH₄VO₃ | 4% (p/p) |

### EXAMPLE 5

### Cobalt silicate (Co₂SiO₄) - Blue pigment

The pigment of the title was prepared as described above in Example 1, but using the following oxides as raw materials:

| | |
|---|---|
| Co₃O₄ | 72.76% (p/p) |
| SiO₂ | 27.24% (p/p) |

### EXAMPLE 6

Tin oxide doped with chromium (Sn₁₋ₓCrₓO₂)- Purple pigment The following raw materials were wet mixed in porcelain jars:

| | |
|---|---|
| SnO₂ | 99% (p/p) |
| Cr₂O₃ | 1% (p/p) |

The so obtained mixture is dried in an oven at 110°C, then ground in a mortar and subsequently rolled on a vertically-positioned, sloping rotating plate wetted with carboxy-methyl-cellulose as adhesive. The pellets obtained in this way were dried in an oven at 110°C for a few hours.

The pellets made with these materials were baked in micro-wave oven with a frequency = 2.45 GHz and P = 1,700 W.

Susceptor and insulating material used: PEG + alumina.

The dimensions of the pallets and related baking times are set out in Table 2 below.

**Table 2**

| **Diameter (mm)** | **Time (minutes)** | **Mixture** |
|---|---|---|
| 8.74 | 12 | Al₂O₃+PEG |
| 10.8 | 12 | Al₂O₃+PEG |
| 12.09 | 10 | Al₂O₃+PEG |
| 16.54 | 6 | Al₂O₃+PEG |

The baking times are reduced for diameters of more than 12 mm.

The X-ray diffractogram shows the presence of a single phase SnO₂ (cassiterite) confirming that all the chromium has entered the structure.

The pigment obtained was ground in a micro-mill with acetone and applied to transparent enamel and to opaque enamel, obtaining excellent results in terms of homogeneity and quality of the colour.

### EXAMPLE 7

### Mixed oxide of Titanium, Antimony and Chromium (Ti_{1-x-y}SbₓCr_{y}O₂) - Yellow ochre pigment

The pigment of the title was prepared as described above in Example 6, but using the following oxides as raw materials:

| | |
|---|---|
| TiO₂ | 86% (p/p) |
| Sb₂O₃ | 10% (p/p) |
| Cr₂O₃ | 4% (p/p) |

## Claims

1. A micro-wave oven comprising a chamber (10) mainly cylindrical multi-mode, electromagnetic wave generators (16) and a tube (11) made of a material transparent to micro-waves or with low absorption of micro-waves, placed inside said chamber, open at both ends (12) protruding from said chamber, and equipped with a rotating disk (13), integral with said tube (11) and connected to a suitable means of movement (14) **characterised in that said electromagnetic wave generators are** arranged along the inner surface of said chamber (10) in suitable cavities diametrically opposed to each other.

2. The micro-wave oven according to claim 1, wherein said tube (11) is made of a material selected from the group consisting of quartz, mullite and alumina.

3. The micro-wave oven according to claim 2, wherein said tube (11) is made of quartz.

4. The micro-wave oven according to claim 1, wherein said rotating disk (13) is placed close to the upper opening externally to the cylindrical chamber (10).

5. The micro-wave oven according to claim 1, wherein said means of movement (14) is a electric motor.

6. The micro-wave oven according to claim 1, further comprising a regulator (21) of the flow exiting the lower opening of said tube.

7. The micro-wave oven according to claim 1, further comprising a device for feeding of the tube (11) at the position of its upper opening selected from a hopper (15), a flange with a circular tube (22) with "sliver" type opening (23) and a flange (26) consisting of a circular tube (27) having one or more septa (28) inside.

8. The micro-wave oven according to claim 1, wherein said electromagnetic wave generators (16) are clusters of Magnetron.

9. The micro-wave oven according to claim 1, further comprising of metal sleeves (17) arranged at the position of the two apertures from which the ends (12) of said tube protrude.

10. The micro-wave oven according to claim 9, wherein mode stirrers (18) are placed in the part of said sleeves (17) inside said chamber (10).

11. The micro-wave oven according to claim 1, further comprising a sensor (20) for measurement of the temperature inside said chamber (10).

12. The micro-wave oven according to claim 1, wherein the inner walls of said cylindrical chamber (10) are lined with a layer of heat insulating material transparent to micro-waves and with low losses.

13. The micro-wave oven according to claim 1, further comprising a microprocessor for the control of uniformity of inner temperature and switching on of said electromagnetic wave generators (16).

14. A process for the preparation of ceramic pigments **by calcination of** mixtures of oxides in the form of pellets, **characterised in that** said calcination **is performed in a** micro-wave oven as defined in claims 1-13.

15. The process according to claim 1**4,** wherein said pellets, possibly dispersed in an insulating medium and possibly mixed with a susceptor, are covered with a susceptor prior to insertion in said micro-wave oven.

16. The process according to claim 1**5,** wherein said insulating medium is alumina, and such susceptor is selected from the group consisting of polyethylenglycol, diethylenglycol, graphite powder, silicone carbide and mixtures thereof.

17. The process according to claim 1**6,** wherein said pellets consist of mixtures of oxides in powder according to the stoichiometry of the pigment to be obtained, amalgamated with adhesives during pellettization.

18. The process according to claim **17,** wherein said adhesives are selected from the group consisting of carboxy-methyl-cellulose and sodium metasilicate Na₂SiO₃ · 5H₂O.

19. The process according to claim **14,** wherein said pellets are calcinated inside said micro-wave oven for a time of between 2.5 and 60 minutes.

20. The process according to claim 1**4,** wherein said pellets have diameter ranging between 2.0 and 30 mm.

21. The process according to claims **14-20,** wherein said calcination is carried out in a micro-wave oven with a frequency equal to 2.45 GHz and variable power.

## Patentansprüche

1. Mikrowellenofen umfassend eine Kammer (10), hauptsächlich zylindrische Mehrfachmodus- Generatoren elektromagnetischer Wellen (16) und ein Rohr (11), das aus einem Material hergestellt ist, das für Mikrowellen transparent ist oder eine geringe Absorption von Mikrowellen besitzt, das innerhalb der Kammer eingesetzt ist, an beiden, von der Kammer herausragenden Enden (12) geöffnet ist und mit einem Drehteller (13) ausgestattet ist, der mit dem Rohr (11) einteilig ist und mit einem geeigneten Bewegungsmittel (14) verbunden ist, **dadurch gekennzeichnet, dass** die Generatoren elektromagnetischer Wellen entlang der Innenoberfläche der Kammer (10) in geeigneten Aussparungen zueinander diametral gegenüberliegend angeordnet sind.

2. Mikrowellenofen nach Anspruch 1, wobei das Rohr (11) aus einem Material hergestellt ist, das aus einer Gruppe bestehend aus Quarz, Mullit (Aluminiumsilicat) und Aluminium ausgewählt wird.

3. Mikrowellenofen nach Anspruch 2, wobei das Rohr (11) aus Quarz hergestellt ist.

4. Mikrowellenofen nach Anspruch 1, wobei der Drehteller (13) nahe der oberen Öffnung außerhalb der zylindrischen Kammer (10) platziert ist.

5. Mikrowellenofen nach Anspruch 1, wobei das Bewegungsmittel (14) ein elektrischer Motor ist.

6. Mikrowellenofen nach Anspruch 1, ferner umfassend einen Regler (21) der Strömung, die aus der unteren Öffnung des Rohres austritt.

7. Mikrowellenofen nach Anspruch 1, ferner umfassend eine Vorrichtung zum Beschicken des Rohres (11) an der Stelle seiner oberen Öffnung ausgewählt von einem Trichter (15), einen Flansch mit einem kreisförmigen Rohr (22) mit einer "Blenden"-artigen Öffnung (23) und einem Flansch (26) bestehend aus einem kreisförmigen Rohr (27), das innenseitig eine oder mehrere Scheidewand/Scheidewände (28) aufweist.

8. Mikrowellenofen nach Anspruch 1, wobei die Generatoren elektromagnetischer Wellen (16) Gruppen von Magnetronen sind.

9. Mikrowellenofen nach Anspruch 1, ferner umfassend Metallhülsen (17), die an der Stelle der zwei Öffnungen angeordnet sind, von welchen die Enden (12) des Rohres hervorstehen.

10. Mikrowellenofen nach Anspruch 9, wobei Modusabhängige Rührer (18) in dem Bereich der Hülsen (17) innerhalb der Kammer (10) platziert sind.

11. Mikrowellenofen nach Anspruch 1, ferner umfassend einen Sensor (20), um die Temperatur innerhalb der Kammer (10) zu messen.

12. Mikrowellenofen nach Anspruch 1, wobei die Innenwände der zylindrischen Kammer (10) mit einer Schicht von Wärmeisolierenden Material, welches für Mikrowellen transparent ist und geringe Verluste aufweist, beschichtet sind.

13. Mikrowellenofen nach Anspruch 1, ferner umfassend einen Mikroprozessor zur Steuerung der Gleichmäßigkeit der Innentemperatur und zum Anschalten der Generatoren elektromagnetischer Wellen (16).

14. Verfahren zur Erzeugung von keramischen Pigmenten durch Brennen (Kalzinieren) von Oxid-Mischungen in der Form von Pellets, **dadurch gekennzeichnet, dass** das Kalzinieren in einem Mikrowellenofen, wie er in den Ansprüchen 1 - 13 definiert ist, durchgeführt wird.

15. Verfahren nach Anspruch 14, wobei die Pellets, möglicherweise in einem isolierenden Medium dispergiert und möglicherweise mit einem Suszeptor gemischt, vor dem Einführen in den Mikrowellenofen mit einem Suszeptor ummantelt werden.

16. Verfahren nach Anspruch 15, wobei das isolierende Medium Aluminium ist, und der Suszeptor aus der Gruppe ausgewählt wird, die aus Polyethylenglycol, Diethylenglycol, Graphit-Puder, Siliziumcarbid und Mischungen davon bestehen.

17. Verfahren nach Anspruch 16, wobei die Pellets aus Mischungen von Oxiden in Puderform bestehen entsprechend der Stöchiometrie des zu erhaltenden Pigmentes, amalgiert mit Klebemittel während dem Pelletieren.

18. Verfahren nach Anspruch 17, wobei die Klebemittel aus der Gruppe ausgewählt werden, die aus Carboxy-Methyl-Zellulose und Natriummetasilikat Na₂SiO₃ · 5H₂O besteht.

19. Verfahren nach Anspruch 14, wobei die Pellets innerhalb des Mikrowellenofens für eine Zeit zwischen 2,5 und 60 Minuten gebrannt werden.

20. Verfahren nach Anspruch 14, wobei die Pellets einen Durchmesser haben, der im Bereich zwischen 2,0 und 30 mm liegt.

21. Verfahren nach Ansprüchen 14 - 20, wobei das Brennen in einem Mikrowellenofen mit einer Frequenz gleich 2,45 GHz und variabler Leistung durchgeführt wird.

## Revendications

1. Four à micro-ondes comprenant une chambre (10) essentiellement multimodale cylindrique, des générateurs d'onde électromagnétiques (16) et un tube (11) réalisé en un matériau transparent aux micro-ondes ou avec une faible absorption des micro-ondes, placé à l'intérieur de ladite chambre, ouvert aux deux extrémités (12) saillant de ladite chambre et équipé d'un disque rotatif (13) d'un seul tenant avec ledit tube (11) et raccordé à un système adapté de mouvement (14), **caractérisé en ce que** lesdits générateurs d'onde électromagnétiques sont disposés le long de la surface interne de ladite chambre (10) dans des cavités adaptées diamétralement opposées l'une de l'autre.

2. Four à micro-ondes selon la revendication 1, dans lequel ledit tube (11) est constitué d'un matériau choisi dans le groupe constitué de quartz, mullite et alumine.

3. Four à micro-ondes selon la revendication 2, dans lequel ledit tube (11) est constitué de quartz.

4. Four à micro-ondes selon la revendication 1, dans lequel ledit disque rotatif (13) est placé près de l'ouverture supérieure extérieurement à la chambre cylindrique (10).

5. Four à micro-ondes selon la revendication 1, dans lequel ledit système de mouvement (14) est un moteur électrique.

6. Four à micro-ondes selon la revendication 1 comprenant en outre un régulateur (21) du flux sortant de l'ouverture inférieure dudit tube.

7. Four à micro-ondes selon la revendication 1, comprenant en outre un dispositif pour alimenter le tube (11) dans la position de son ouverture supérieure choisie parmi une trémie (15), une bride avec un tube circulaire (22) avec une ouverture de type « écaille » (23) et une bride (26) constituée d'un tube circulaire (27) ayant une ou plusieurs cloisons (28) à l'intérieur.

8. Four à micro-ondes selon la revendication 1, dans lequel lesdits générateurs d'onde électromagnétiques (16) sont des grappes de magnétron.

9. Four à micro-ondes selon la revendication 1, comprenant en outre des manchons métalliques (17) disposés dans la position des deux ouvertures d'où ressortent les extrémités (12) dudit tube.

10. Four à micro-ondes selon la revendication 9, dans lequel les agitateurs de mode (18) sont placés dans la partie desdits manchons (17) à l'intérieur de ladite chambre (10).

11. Four à micro-ondes selon la revendication 1, comprenant en outre un capteur (20) pour la mesure de la température à l'intérieur de ladite chambre (10).

12. Four à micro-ondes selon la revendication 1, dans lequel les parois internes de ladite chambre cylindrique (10) sont revêtues d'une couche de matériau isolant thermique transparent aux micro-ondes et avec de faibles pertes.

13. Four à micro-ondes selon la revendication 1, comprenant en outre un microprocesseur pour le contrôle de l'uniformité des températures internes et la commutation desdits générateurs d'onde électromagnétique (16).

14. Procédé pour la préparation de pigments de céramique par calcination de mélanges d'oxydes sous forme de pastilles, **caractérisé en ce que** ladite calcination est réalisée dans un four à micro-ondes tel que défini dans les revendications 1-13.

15. Procédé selon la revendication 14, dans lequel lesdites pastilles, si possible dispersées dans un milieu isolant et éventuellement mélangées avec un suscepteur, avant l'insertion dans ledit four à micro-ondes.

16. Procédé selon la revendication 15, dans lequel ledit milieu isolant est l'alumine, et ledit suscepteur est choisi dans le groupe constitué de polyéthylèneglycol, de diéthylène-glycol, de poudre de graphite, de carbure de silicium et des mélanges correspondants.

17. Procédé selon la revendication 16, dans lequel lesdites pastilles sont constituées de mélanges d'oxydes en poudre selon la stoechiométrie du pigment à obtenir, amalgamés avec des adhésifs pendant le pastillage.

18. Procédé selon la revendication 17, dans lequel lesdits adhésifs sont choisis dans le groupe constitué de carboxyméthylcellulose et métasilicate de sodium Na₂SiO_{3·}5H₂O.

19. Procédé selon la revendication 14, dans lequel lesdites pastilles sont calcinées à l'intérieur dudit four à micro-ondes pendant 2,5 à 60 minutes.

20. Procédé selon la revendication 14, dans lequel lesdites pastilles ont un diamètre compris entre 2,0 et 30 mm.

21. Procédé selon les revendications 14-20, dans lequel ladite calcination est réalisée dans un four à micro-ondes avec une fréquence égale à 2,45 GHz et à une puissance variable.
